# EUROPEAN PATENT SPECIFICATION

(11) **EP 2 685 599 B1**
(45) Date of publication and mention of the grant of the patent: **06.09.2017**
(21) Application number: 12757908.4
(22) Date of filing: 01.03.2012
(51) Int. Cl.: H02J 7/34, B60L 3/00, B60L 11/18, H01M 10/44, H01M 10/48, H02J 7/00, H02J 7/04, B60R 16/033, H01M 10/625, H01M 10/615, H01M 10/633, H01M 10/657

(54) **BATTERY CHARGING CONTROL DEVICE**
BATTERIELADUNGS-STEUERVORRICHTUNG
DISPOSITIF DE COMMANDE DE CHARGE DE BATTERIE

(30) Priority: 11.03.2011 JP 2011054094
(43) Date of publication of application: 15.01.2014
(73) Proprietor: NISSAN MOTOR CO., LTD., Yokohama-shi, Kanagawa 221-0023 (JP)
(72) Inventor: TAKANO, Atsushi, Kanagawa 243-0123 (JP); OKINO, Kazuhiko, Kanagawa 243-0123 (JP); YAMAMOTO, Naoki, Kanagawa 243-0123 (JP); HIGUCHI, Shinsuke, Kanagawa 243-0123 (JP); IIMORI, Takashi, Kanagawa 243-0123 (JP); SOGA, Tsutomu, Kanagawa 243-0123 (JP); NAGAKURA, Hayato, Kanagawa 243-0123 (JP)
(74) Representative: Grünecker Patent- und Rechtsanwälte PartG mbB
(86) International application number: PCT/JP2012/055209
(87) International publication number: WO 2012/124490

(56) References cited:
- JP-A- 8 214 411
- US-A1- 2009 114 463
- US-A1- 2010 292 855

## Description

The present invention relates to a battery charging control device according to the preamble of independent claim 1., used for a system that has a battery whose charge time can be designated and a power load which is operated by power supplied through a charging power system of the battery when a predetermined condition is satisfied. Such a battery charging control device can be taken from the prior art document US 2009/0114463 A1.

Prior art document US 2010/0292855 A1 discloses battery charging control methods, electrical vehicle charging methods, battery charging control apparatus, and electrical vehicles. Battery charging control methods include accessing price information for electrical energy supplied by an electrical power distribution system and controlling an adjustment of an amount of the electrical energy from the electrical power distribution system used to charge a rechargeable battery at different moments in time using the price information.

A system having the battery and the power load, as disclosed, for instance, in Patent Document 1, it is a battery warming-up system having a battery of an electric vehicle and a heater that controls a temperature of the battery by warming up the battery when the battery is unused.

It is conceivable that the battery mounted in the electric vehicle is used in a cold district, and a battery electrolyte might freeze while the battery is unused.

When the temperature of the battery lowers, although a battery charge state SOC does not lower, a usable input/output power for the battery decreases due to an increase of an internal resistance. Further, when the battery electrolyte freezes, the usable input/output power of the battery finally becomes 0 (zero), then in a case of the electric vehicle that uses the battery as a travelling energy source, the electric vehicle gets into a travel-impossible state.

Thus, a battery temperature control device, which controls the battery temperature by warming up the battery by the heater before the battery temperature lowers to a temperature that causes a state in which such problem of the usable input/output power of the battery occurs, is required.

The battery warming-up system disclosed in Patent Document 1, for example when controlling the battery temperature by warming up the battery by the heater for such sake, performs the control as follows.

That is, when the battery temperature lowers below a predetermined temperature, the battery warming-up system warms up the battery by operating the heater. However, at the same time as this warming-up, if the battery charge state is less than a predetermined value, the battery warming-up system further performs charge of the battery, and the battery is warmed up also by heat generated by this battery charge.

In the case of a technique disclosed in Patent Document 1, however, when the battery temperature lowers below the predetermined temperature, if the battery charge state is less than the predetermined value, the battery charge is also performed. Because of this, at this time, as long as the battery temperature is lower than the predetermined temperature, the battery is continuously charged until the battery charge state is equal to or greater than the predetermined value.

Here, regarding the charge of the battery, it is preferable to charge the battery using low-priced midnight power (late-night off-peak electricity) from the viewpoint of reduction of a running cost. For instance, in order to respond to such request, or in order that the battery is in a fully charged state at a departure time, it is desirable that a time of the battery charge can be designated or nominated.

In a case where the battery warming-up system of Patent Document 1 is applied to the vehicle in which the time of the battery charge can be designated, the following problems arise.

That is, as described above, since the battery warming-up system of Patent Document 1 is a system that, when the battery temperature lowers below the predetermined temperature and also the battery charge state is less than the predetermined value, charges the battery so as to increase the battery charge state, the battery charge for increasing the battery charge state is carried out at a time except the above battery charge designated time.

When the battery charge for increasing the battery charge state is carried out at the time except the battery charge designated time, for instance, such problems that the battery charge using the low-priced midnight power is not performed and at least relatively great proportion of a charging amount of the battery is covered by high-priced power other than the midnight power then the running cost increases arise.

### Citation List

### Patent Document

Patent Document 1 : Japanese Patent Provisional Publication Tokkai No. 2000-040536

### Summary of the Invention

An obj ect of the present invention is to provide a battery charging control device that is capable of avoiding the above problems about the running cost by suppressing the battery charge for increasing the battery charge state to a minimum at the time except the battery charge designated time.

To achieve this object, the battery charging control device according to the present invention is configured according to the independent claim 1. Preferred embodiments are laid down in the dependent claims.

First, the battery charging control device as a prerequisite for the present invention will be explained. The battery charging control device has a battery that can be charged by a designated charge time and a power load that is connected to a charging power system of the battery and is operated by a power supplied through the charging power system when a predetermined condition is satisfied.

The battery charging control device is provided with a charge-state-holding charge power controlling section that, during operation of the power load, when a present time is not in the designated charge time, keeps a charge power for the battery at a predetermined battery charge state that is smaller than a full charge state.

According to the battery charging control device, during operation of the power load by the power supplied through the charging power system, when the present time is not in the designated charge time, the charge power for the battery is kept at the predetermined battery charge state that is smaller than the full charge state. Thus, by a proper setting of the predetermined battery charge state, the battery charge to increase the battery charge state during a time period when the present time is not in the designated charge time can be suppressed.

Accordingly, the battery charge to increase the battery charge state can be carried out mainly during the designated charge time, and the charging control that fulfills an intention or aim of the setting of the charge time is achieved. For instance, a considerably larger charging amount of all charging amount can be covered by the low-priced midnight power, then reduction or suppression of the running cost can be achieved.

### Brief Description of Drawings

[Fig. 1]

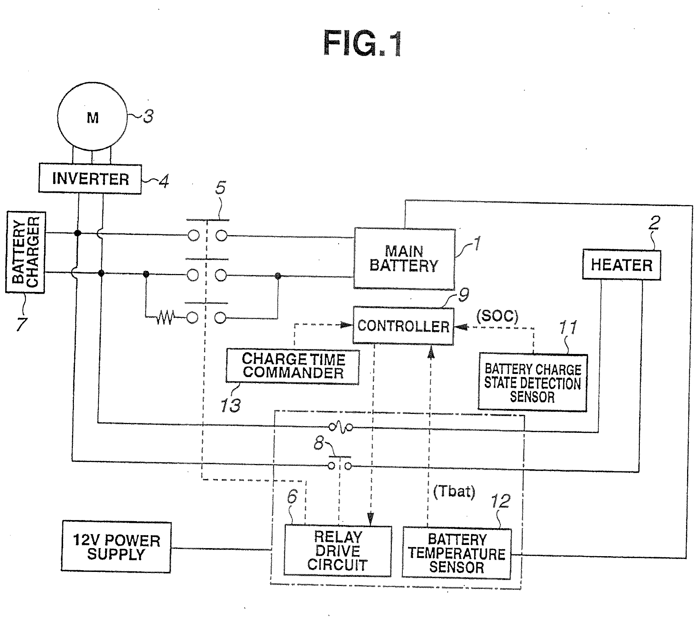

   Fig. 1 is a control system diagram schematically showing a battery charging control device of an embodiment of the present invention, together with a battery temperature control device.
[Fig. 2]

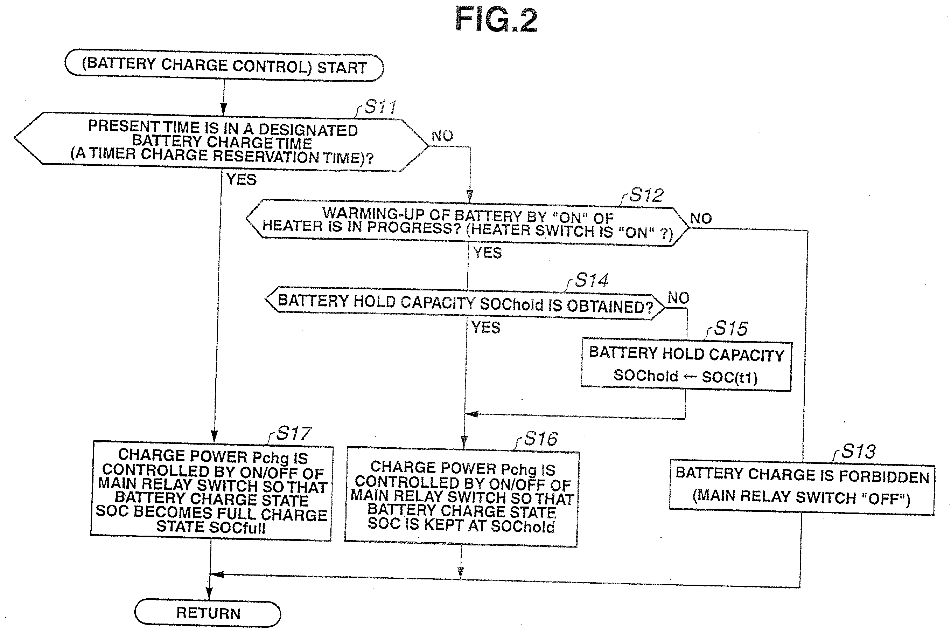

   Fig. 2 is a flow chart of a battery charging control program executed by a controller shown in Fig. 1.
[Fig. 3]

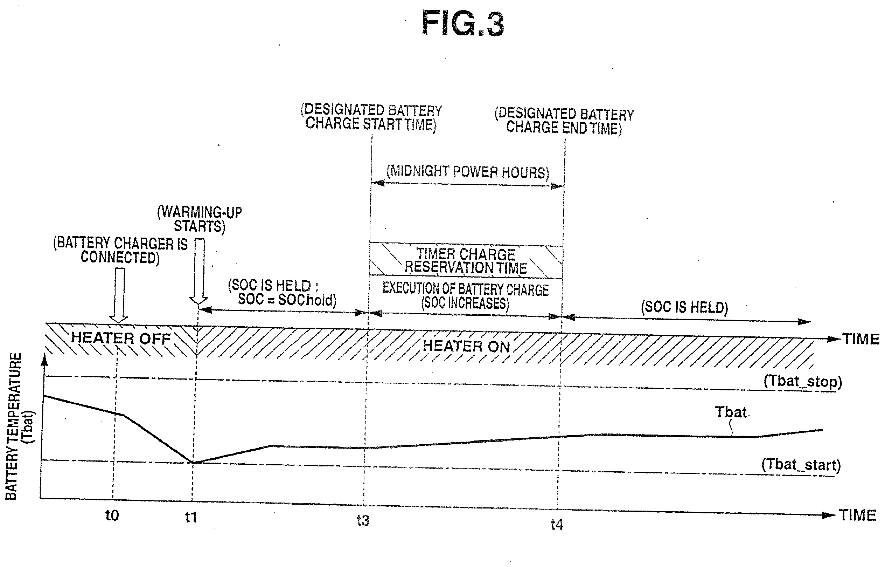

   Fig. 3 is an operation time chart of the battery charging control program shown in Fig. 2.
[Fig. 4]

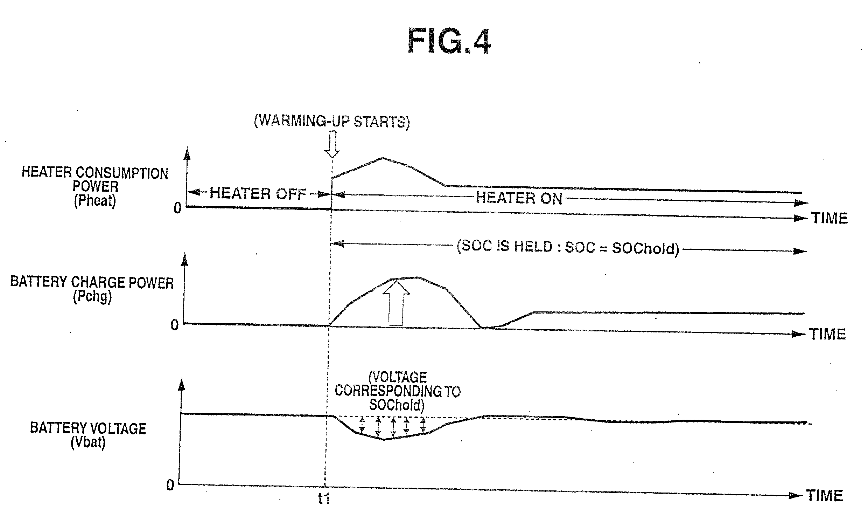

   Fig. 4 shows operation time charts shown with an axis of time between a battery warming-up start time t1 and a designated battery charge start time t3 in Fig. 3 enlarged.

### Description of Embodiments

In the following description, an embodiment of the present invention will be explained with reference to the drawings.

Fig. 1 is a control system diagram of a battery charging control device of the embodiment of the present invention. In the present embodiment, this battery charging control device is a device for charging a main battery 1 used for travel of an electric vehicle such as an electric car and a hybrid vehicle.

The main battery 1 is a large-capacity battery provided for drive of a drive motor. The large-capacity battery is formed, as an integral component, so that a plurality of battery shells are stacked (or arranged) as a unit of a battery module and a plurality of the battery modules are arranged as one set.

In Fig. 1, a reference sign 2 denotes a heater to perform a temperature control of the battery 1, and corresponds to a power load in the present invention. This heater 2 is a heater that is provided close to the battery module and set along a stack direction of the battery shell of the battery module then warms up the battery 1.

In Fig. 1, a reference sign 3 denotes an electric motor used for drive of the travel of the electric vehicle. This electric motor 3 is electrically connected to the battery 1 through an inverter 4.

A main relay switch 5 is inserted on an electric line between the inverter 4 and the battery 1. This main relay switch 5 is a switch that opens/closes in synchronization with or in response to an ignition switch (not shown) of the electric vehicle through a drive controller (also not shown). The main relay switch 5 closes when the ignition switch is ON, and the main relay switch 5 opens when the ignition switch is OFF.

During close of the main relay switch 5 in synchronization with ON of the ignition switch, a DC power from the battery 1 is converted from DC to AC by the inverter 4, and is outputted to the electric motor 3 under a control of the inverter 4, then the electric vehicle can travel by drive of the electric motor 3.

During open of the main relay switch 5 in synchronization with OFF of the ignition switch, the DC power from the battery 1 is not outputted to the electric motor 3, then the electric vehicle can be held in a vehicle stop state by halt of the electric motor 3.

A battery charger 7 is connected and provided between a DC side of the inverter 4 and the main relay switch 5. When this battery charger 7 is connected to an external power supply of a charging station or of a battery charging facility provided at a home, the main relay switch 5 is closed by a charge controller (not shown), thereby charging the battery 1 by the external power supply.

The temperature control and a charge control of the battery 1 will be explained below.

As shown in Fig. 1, the heater 2 provided close to the battery module along the stack direction of the battery shell, to perform the temperature control of the battery 1 as mentioned above, is electrically connected between the DC side of the inverter 4 and the main relay switch 5. A heater switch 8 is inserted on an electric line between this connection part and the heater 2.

Open/close of the heater switch 8 is controlled, through a relay drive circuit 6, by a controller 9 that governs the temperature control and the charge control of the battery 1.

Further, this controller 9 also controls open/close of the main relay switch 5 through the relay drive circuit 6 during open of the main relay switch 5 in synchronization with OFF of the ignition switch and during close of the main relay switch 5 in synchronization with the connection of the battery charger 7 to the external power supply.

Here, during open of the main relay switch 5 in synchronization with OFF of the ignition switch, the controller 9 closes also the main relay switch 5 in synchronization with "close" of the heater switch 8 then turns the heater 2 ON, and the controller 9 opens also the main relay switch 5 in synchronization with "open" of the heater switch 8 then turns the heater 2 OFF.

Further, during close of the main relay switch 5 in synchronization with the connection of the battery charger 7 to the external power supply, with the proviso that the heater switch 8 is in a "close" state, the controller 9 performs the open/close control of the main relay switch 5 then executes the after-mentioned battery charge control which is an aim of the present invention. In addition, in a case where the heater switch 8 is "open", the controller 9 opens the main relay switch 5, and the battery charge is not carried out.

In order to perform the ON/OFF control of the heater 2 (ON/OFF of the battery temperature control) and the charge control of the battery 1 through the above close/open of the heater switch 8 and the main relay switch 5, the controller 9 inputs a signal from a battery charge state detection sensor 11 that detects a battery charge state SOC of the battery 1, a signal from a battery temperature sensor 12 that senses a temperature Tbat of the battery 1 and a signal from a charge time commander 13 by which a user of the vehicle operates to set a battery charge time between a battery charge start time and a battery charge end time of the battery 1.

The charge time commander 13 is a section that is provided in order for the user of the vehicle to set the battery charge time for the sake of suppressing a running cost by full charge of the battery 1 using low-priced midnight power (late-night off-peak electricity) and for the sake of fully charging the battery 1 just at a departure time so that mileage or travel distance becomes a maximum.

The controller 9 performs, on the basis of these input information, the battery temperature control by executing a control program (not shown), and also performs the charge control of the battery 1 by executing a control program shown in Fig. 2 as follows.

First, an outline of the temperature control of the battery 1, which is disconnected from the electric motor 3 (the inverter 4) and is in an unused state by the ignition switch OFF ("open" of the main relay switch 5), will be explained.

Regarding the battery 1 that is in the unused state, its usable input/output power becomes 0 (zero) by the fact that a battery electrolyte freezes especially in a cold district, then the electric vehicle gets into a travel-impossible state. Thus, there is a need to warm up the battery 1 by operating the heater 2 as necessary and to control the temperature of the battery 1.

Because of this, during the ignition switch OFF, the battery temperature Tbat is checked whether the battery temperature Tbat is less than a warming-up start temperature Tbat_start (e.g. about -17°C) shown as an example in Fig. 3 or is equal to or higher than a warming-up stop temperature Tbat_stop (e.g. -10°C) also shown as an example in Fig. 3.

Before time t1 in Fig. 3 at which the battery temperature Tbat lowers below the warming-up start temperature Tbat_start (Tbat < Tbat_start), since there is no worry of immediate freeze of the battery electrolyte, the controller 9 turns the heater 2 OFF by opening the heater switch 8 and the main relay switch 5, then the warming-up of the battery 1 is not carried out.

At time t1 in Fig. 3 at which the battery temperature Tbat becomes less than the warming-up start temperature Tbat_start (Tbat < Tbat_start), the controller 9 turns the heater 2 ON by closing the heater switch 8 and the main relay switch 5, then the warming-up of the battery 1 is carried out.

Afterwards, the controller 9 checks whether or not the battery temperature Tbat becomes equal to or higher than the warming-up stop temperature Tbat_stop at every lapse of a predetermined time. As shown in Fig. 3, as long as the battery temperature Tbat is not "Tbat ≧ Tbat_stop" after time t1, the controller 9 continues turning the heater 2 ON by "close" of the heater switch 8 and the main relay switch 5, then the warming-up of the battery 1 is continued.

Then when the battery temperature Tbat becomes "Tbat ≧ Tbat_stop", the controller 9 turns the heater 2 OFF by "open" of the heater switch 8 and the main relay switch 5, then the warming-up of the battery 1 is terminated.

By repetition of the above cycle, the battery 1 is not held in the state of "Tbat < Tbat_start", it is therefore possible to prevent the vehicle from getting into the travel-impossible state caused by the freeze of the battery electrolyte.

Further, when the battery temperature Tbat becomes "Tbat ≧ Tbat_stop", since the heater 2 is turned OFF and the warming-up of the battery 1 is terminated, it is possible to avoid waste of power consumption due to unnecessary "ON" of the heater 2.

Next, the charge control of the battery 1 performed by the controller 9 will be explained with reference to Fig. 2.

The control program of Fig. 2 is executed from a time when the main relay switch 5 is closed and the battery charger 7 (or the vehicle) is in a charge-possible state by the fact that the battery charger 7 is connected to the external power supply of the charging station or of the battery charging facility provided at the home at time t0 shown in Fig. 3.

At step S11, a check is made as to whether or not a present time is in a timer charge reservation time (or a timer charge preset time) between the battery charge start time and the battery charge end time designated by the charge time commander 13.

In Fig. 3, the designated battery charge start time is denoted as time t3 after time t1, and the designated battery charge end time is denoted as time t4.

When judging that the present time is not in the timer charge reservation time (t3 ∼ t4) at step S11, at step S12, a check is made as to whether or not the warming-up of the battery 1 is in progress by "ON" or "OFF" of the heater switch 8.

Here, in a battery charger connecting state after time t0 shown in Fig. 3, since a power from the battery charger 7 exists, if the heater switch 8 is ON, the heater 2 can be operated regardless of ON/OFF of the main relay switch 5. Therefore, at step S12, as described above, it is possible to check whether or not the warming-up of the battery 1 is in progress by only "ON" or "OFF" of the heater switch 8.

When the warming-up of the battery 1 is not in progress, which is a state like a state before a warming-up start time t1 shown in Fig. 3, at step S13, the charge of the battery 1 is forbidden and is not carried out by "OFF" of the main relay switch 5, which is understood from a battery charge power P_{chg} = 0 before the warming-up start time t1 shown in Fig. 4.

When judging that the warming-up of the battery 1 by ON of the heater 2 is in progress at step S12, at step S14, a check is made as to whether a battery hold capacity SOC_{hold} to be obtained at a warming-up start time (in Fig. 3, t1) is already obtained or not.

When the battery hold capacity SOC_{hold} is not obtained yet, after a battery charge state SOC (t1) at the warming-up start time (in Fig. 3, t1) is set to the battery hold capacity SOC_{hold} at step S15, the control routine proceeds to step S16. When the battery hold capacity SOC_{hold} is already obtained by an execution of step S15, the routine skips this step S15 and proceeds to step S16.

Step S16 is a step or a section that corresponds to a charge-state-holding charge power controlling step or section (a a charge-state-holding charge power controlling means) of the present invention. At this step S16, the charge power P_{chg} for the battery 1 (the charge power P_{chg} supplied to the battery 1) is controlled by ON/OFF of the main relay switch 5 so that the battery charge state SOC is kept at the battery hold capacity SOC_{hold}.

This control can be realized by performing the following manner. If SOC < SOC_{hold}, by ON of the main relay switch 5, the charge power is supplied to the battery 1 from the battery charger 7 . When the battery charge state SOC becomes "SOC = SOC_{hold}", by OFF of the main relay switch 5, the charge power is not supplied to the battery 1 from the battery charger 7.

When the charge power P_{chg} for the battery 1 is controlled so that the battery charge state SOC is kept at the battery hold capacity SOC_{hold} as described above, the following effects can be obtained.

Fig. 4 shows operation time charts shown with an axis of time between the battery warming-up start time t1 and the designated battery charge start time t3 in Fig. 3 enlarged more than Fig. 3. Just after time t1, a heater consumption power Pₕₑₐₜ rapidly increases, and the battery charge state SOC temporarily becomes worse or decreases by an amount equivalent to the increase of the heater consumption power Pₕₑₐₜ, which is understood from a decreasing tendency shown by a solid line of a battery voltage V_{bat} just after time t1.

If this decrease state (this worse state) of the battery charge state SOC is left undone, the battery charge state SOC can not reach a full charge state as intended between the timer charge reservation time t3 - t4 of Fig. 3. Because of this, there arise problems that a proportion of the charge using the low-priced midnight power decreases then the running cost increases, and the battery 1 is not in a fully charged state at a travel start time after the battery charge end of time t4 then the travel distance is shortened.

Here, in the present embodiment, at step S16, the charge power P_{chg} for the battery 1 is increased so that the battery charge state SOC is kept at the battery hold capacity SOC_{hold}, as shown by the operation time charts just after the warming-up start time t1 in Fig. 4. Consequently, as shown by a broken line of the battery voltage V_{bat} in Fig. 4, the battery voltage V_{bat} can be kept at a level corresponding to the battery hold capacity SOC_{hold} even just after time t1.

Accordingly, the battery charge to increase the battery charge state SOC more than the level of time t1 is not carried out at a time except the timer charge reservation time t3 ∼ t4 of Fig. 3. As a consequence, the battery charge state SOC can reach the full charge state as intended between the timer charge reservation time t3 ∼ t4 of Fig. 3, and the proportion of the charge using the low-priced midnight power is increased to a maximum then the running cost can be suppressed. Further, the battery 1 surely becomes the fully charged state at the travel start time after the battery charge end of time t4 then the travel distance can extend to a maximum.

In Fig. 2, at step S11, when judging that the present time is in the timer charge reservation time between the battery charge start time t3 (see Fig. 3) and the battery charge end time t4 (see Fig. 3), the control routine proceeds to step S17.

At step S17, the charge power P_{chg} for the battery 1 is controlled by ON/OFF of the main relay switch 5 so that the battery charge state SOC becomes a full charge state SOC_{full}.

This control can be realized by performing the following manner. If SOC < SOC_{full}, by ON of the main relay switch 5, the charge power is supplied to the battery 1 from the battery charger 7. When the battery charge state SOC becomes "SOC = SOC_{full}", by OFF of the main relay switch 5, the charge power is not supplied to the battery 1 from the battery charger 7.

When carrying out the charge to the battery 1 so that the battery charge state SOC becomes the full charge state SOC_{full} between the timer charge reservation time t3 ∼ t4 as described above, an intention or aim of the setting of the timer charge reservation time can be surely achieved. The power consumed for the full charge is then fully covered by the low-priced midnight power, and it is possible to suppress the running cost.

According to the battery charging control device described in the present embodiment above, as shown in Figs. 3 and 4, during the warming-up of the battery 1 by the operation of the heater 2 (the power load) after time t1, according to whether or not the present time is in the timer charge reservation time (t3 ∼ t4), when the present time is not in the timer charge reservation time (t3 ∼ t4), the charge power P_{chg} for the battery 1 is controlled so that the battery charge state SOC is kept at the battery hold capacity SOC_{hold} that is the battery charge state SOC (t1) of the warming-up start time t1. Therefore, as shown in Fig. 4, even if the heater consumption power Pₕₑₐₜ rapidly increases just after the warming-up start time t1 and the battery charge state SOC has a tendency to temporarily become worse or decrease by the amount equivalent to the increase of the heater consumption power Pₕₑₐₜ as shown by the decreasing tendency indicated by the solid line of the battery voltage V_{bat} just after time t1, the battery voltage V_{bat} just after time t1 can be kept at the level corresponding to the battery hold capacity SOC_{hold} as shown by the broken line of the battery voltage V_{bat} in Fig. 4.

Hence, the battery charge to increase the battery charge state SOC more than the level of time t1 is not carried out at the time except the timer charge reservation time t3 ∼ t4 of Fig. 3. As a consequence, the battery charge state SOC can reach the full charge state as intended between the timer charge reservation time t3 ∼ t4 of Fig. 3, and the proportion of the charge using the low-priced midnight power is increased to the maximum then the running cost can be suppressed. Further, the battery 1 surely becomes the fully charged state at the travel start time after the battery charge end of time t4 then the travel distance can extend to the maximum.

In addition, in the case where the present time is in the timer charge reservation time (t3 ∼ t4), the charge power P_{chg} for the battery 1 is controlled so that the battery charge state SOC becomes the full charge state SOC_{full}. The power consumed for the full charge is then fully covered by the low-priced midnight power, and it is consequently possible to suppress the running cost.

## Claims

1. A battery charging control device having a battery (1) that is adapted to be charged by a timer charge reservation time, a power load (2) that is connected to a charging power system (7) of the battery (1) and is adapted to be operated by a power supplied through the charging power system (7), and a controller (9) that is adapted to control a charge power (P_{chg}) supplied to the battery (1), the power load is a battery-warming-up heater (2), and when present time is in the timer charge reservation time, the controller (9) is adapted to control the charge power (P_{chg}) so that the battery charge state (SOC) becomes a full battery charge state (SOC_{full}), and when present time is not in the timer charge reservation time and warming-up of the battery (1) by the battery-warming-up heater (2) is carried out,
**the device is characterized in that**
the controller (9) is adapted to control the charge power (P_{chg}) so that the battery charge state (SOC) is kept at a battery hold capacity (SOC_{hold}) that is smaller than the full battery charge state (SOC_{full}).

2. The battery charging control device as claimed in claim 1, **characterized in that** the battery hold capacity (SOC_{hold}) is a battery charge state (SOC(t1)) of a time (t1) when the operation of the battery-warming-up heater (2) is started.

3. The battery charging control device as claimed in claim 1 or 2, **characterized in that** the battery-warming-up heater (2) is adapted to warm up the battery (1) when battery temperature becomes less than a predetermined temperature (Tbat_start).

## Patentansprüche

1. Eine Batterie-Lade-Steuervorrichtung, die eine Batterie (1), welche angepasst ist, um durch eine Zeit-Lade-Vorwahl-Zeit geladen zu werden, einen Leistungs-Lader (2), der mit einem Lade-Leistungs-System (7) der Batterie (1) verbunden ist, und der angepasst ist durch Leistung, zugeführt durch das Lade-Leistungs-System, betrieben zu werden, und eine Steuerung (9), die angepasst ist, um eine Lade-Leistung (P_{chg}), die zu der Batterie (1) zugeführt ist, zu steuern hat,
der Leistungs-Lader ist ein Batterie-Aufwärm-Heizer (2), und wenn die momentane Zeit, die Zeit-Lade-Vorwahl-Zeit ist, ist die Steuerung (9) angepasst, um die Lade-Leistung (P_{chg}) zu steuern, sodass der Batterie-Ladezustand (SOC) ein voller Batterie-Ladezustand (SOC_{full}) wird, und wenn die momentane Zeit nicht die Zeit-Lade-Vorwahl-Zeit ist, und Aufwärmen der Batterie (1) durch den Batterie-Aufwärm-Heizer (2) ausgeführt ist, ist die Vorrichtung **dadurch gekennzeichnet, dass** die Steuerung (9) angepasst ist, um die Lade-Leistung (P_{chg}) zu steuern, sodass der Batterie-Ladezustand (SOC) bei einer Batterie-Haltekapazität (SOC_{hold}) gehalten ist, die kleiner ist als der volle Batterie-Ladezustand (SOC_{full}).

2. Die Batterie-Lade-Steuervorrichtung, wie beansprucht in Anspruch 1, **dadurch gekennzeichnet, dass** die Batterie-Haltekapazität (SOC_{hold}) ein Batterie-Ladezustand (SOC(t1) einer Zeit (t1) ist, wenn der Betrieb des Batterie-Aufwärm-Heizers (2) gestartet ist.

3. Die Batterie-Lade-Steuervorrichtung, wie beansprucht in Anspruch 1 oder 2, **dadurch gekennzeichnet, dass** der Batterie-Aufwärm-Heizer (2) angepasst ist, um die Batterie (1) aufzuwärmen, wenn die Batterie-Temperatur niedriger als eine vorgegebene Temperatur (Tbat_start) wird.

## Revendications

1. Dispositif de commande de charge d'accumulateur comprenant un accumulateur (1) qui est conçu pour être chargé pendant un temps de réservation de charge de temporisateur, une charge (2) consommant de la puissance qui est connectée un système de chargement de puissance (7) de l'accumulateur (1) et est conçue pour fonctionner avec une puissance fournie par l'intermédiaire du système de chargement de puissance (7), et un dispositif de commande (9) qui est conçu pour commander une puissance de charge (P_{chg}) fournie à l'accumulateur (1),
la charge consommant de la puissance est un dispositif (2) de chauffage chauffant l'accumulateur et, lorsqu'un horaire se situe dans le temps de réservation de charge de temporisateur, le dispositif de commande (9) peut commander la puissance de charge (P_{chg}) de façon que l'état de charge d'accumulateur (SOC) devienne un état de charge totale d'accumulateur (SOC_{full}) et, lorsqu'un horaire ne se situe pas dans le temps de réservation de charge de temporisateur et qu'un chauffage de l'accumulateur (1) par le dispositif (2) de chauffage chauffant l'accumulateur est en cours,
le dispositif est **caractérisé en ce que**
le dispositif de commande (9) est conçu pour commander la puissance de charge (P_{chg}) de façon que l'état de charge d'accumulateur (SOC) soit maintenu au niveau d'une capacité de tenue d'accumulateur (SOC_{hold}) qui est inférieure à l'état de charge totale d'accumulateur (SOC_{full}).

2. Dispositif de commande de charge d'accumulateur selon la revendication 1, **caractérisé en ce que** la capacité de tenue d'accumulateur (SOC_{hold}) est un état de charge d'accumulateur (SOC(t1)) d'un instant (t1) de début de mise en marche du dispositif (2) de chauffage chauffant l'accumulateur.

3. Dispositif de commande de charge d'accumulateur selon la revendication 1 ou 2, **caractérisé en ce que** le dispositif (2) de chauffage chauffant l'accumulateur est conçu pour chauffer l'accumulateur (1) lorsque la température de l'accumulateur descend sous une température prédéterminée (Tbat_start).
